# EUROPÄISCHE PATENTSCHRIFT

(11) **EP 0 871 152 B1**
(45) Veröffentlichungstag und Bekanntmachung des Hinweises auf die Patenterteilung: **31.10.2001**
(21) Anmeldenummer: 98105931.4
(22) Anmeldetag: 01.04.1998
(51) Int. Cl.: G09C 1/04

(54) **Vorrichtung zur kodierten Speicherung von Geheimzahlen**
Device for encrypted notation of numerical codes
Dispositif de notation cryptée des codes numériques

(30) Priorität: 11.04.1997 DE 29706492 U; 23.09.1997 DE 19741890
(43) Veröffentlichungstag der Anmeldung: 14.10.1998
(73) Patentinhaber: Heimpel, Edda, 60388 Frankfurt am Main (DE)
(72) Erfinder: Heimpel, Kurt, 60388 Frankfurt am Main (DE)

(56) Entgegenhaltungen:
- WO-A-94/12966
- DE-A- 3 005 432
- DE-C- 4 442 755
- GB-A- 1 524 005
- GB-A- 2 114 796
- US-A- 3 287 839
- US-A- 4 100 689

## Beschreibung

Die Erfindung betrifft eine Vorrichtung zur kodierten Speicherung einer Vielzahl von Geheimzahlen, bestehend aus wenigstens vier unabhängig voneinander drehbar gelagerten Scheiben, die in über den Umfang verteilten Feldern vom Benutzer entsprechend den Geheimzahlen individuell mit Ziffern zu versehen und entsprechend einem individuellen Code in eine bestimmte Relativstellung einstellbar sind, in der die Geheimzahlen ablesbar sind.

Derartige Vorrichtungen sind in der DE 44 42 755 C1 beschrieben. Die Scheiben sind axial nebeneinander auf einem Bolzen oder konzentrisch in einer Ebene gelagert. Die individuell mit Ziffern für die Geheimzahlen zu versehenden Felder befinden sich auf der Umfangsfläche bzw. auf einer Seitenfläche der Scheiben. Ein Nachteil der bekannten Vorrichtungen ist ihre Größe, die aus der genannten räumlichen Gestaltung und der Notwendigkeit resultiert, daß alle Felder eine ausreichende Mindestgröße haben müssen, um sich einwandfrei mit Ziffern in gut ablesbarer Größe versehen zu lassen. Ein weiterer Nachteil ergibt sich daraus, daß auch die Code- bzw. Schlüsselzahl, durch deren Einstellung als Ziffernreihe man die Scheiben in eine bestimmte Relativstellung bringt, in der sich die Geheimzahlen als weitere Ziffernreihen erschließen, in Felder eingesetzt wird, die Teil der Ringreihen von Feldern sind, die zur Aufnahme der Ziffern der Geheimzahlen dienen. Dies kann zu Fehleinstellungen führen, wenn auf einer Scheibe eine bestimmte, für die Bildung der Codezahl benötigte Ziffer an anderer Stelle des Umfangs noch ein zweites oder drittes Mal zur Bildung einer Geheimzahl eingesetzt werden muß.

Der Erfindung liegt die Aufgabe zugrunde, eine Vorrichtung der eingangs genannten Art zur Verfügung zu stellen, die so klein sein kann, daß sie sich bequem aufbewahren und mitführen läßt, aber noch eine für die Lesbarkeit ausreichende Größe der Ziffern der Geheimzahlen gewährleistet, und bei der zufällige Übereinstimmungen zwischen dem Code und den Geheimzahlen keine Auswirkungen auf die eindeutige Einstellung der Ableseposition der Scheiben haben.

Vorstehende Aufgabe wird erfindungsgemäß dadurch gelöst, daß die Scheiben an einer Tragplatte etwa von der Größe einer Scheckkarte derart nebeneinander gelagert sind, daß sie sich am Umfang teilweise überlappen und daß die Zeichen, aus denen der Code zu bilden ist, auf der Seite der Felder neben deren radialen Bereich oder auf der anderen Seite der Scheiben angebracht sind.

Die neue Vorrichtung kann etwa das Format von Scheck- und Kreditkarten haben, also zusammen mit diesen in die Brieftasche gesteckt werden. Die vorgeschlagene teilweise Überlappung gestattet trotz des kleinen Formats die Verwendung verhältnismäßig großer Scheiben, so daß auch die mit Ziffern zu versehenden Felder entsprechend groß sein können. Die Anordung des Codes abseits von den Ziffernfeldern gewährleistet völlige Unabhängigkeit zwischen diesem und den Geheimzahlen. Sie hat den weiteren Vorteil, daß die Elemente, aus denen der Schlüssel zusammengesetzt wird, schon vorab auf die Scheiben gedruckt werden können, so daß der Benutzer nur noch die Scheiben entsprechend dem individuellen Code in die Ablesestellung zu drehen und dann mit den Geheimzahlen zu beschriften braucht. In die verbleibenden Felder werden beliebige Ziffern eingetragen. Der Code kann eine Schlüsselzahl sein, er kann aber auch z. B. als eine Kombination aus Bildern, Symbolen, Buchstaben oder Farbfeldern zusammengesetzt werden. Es versteht sich, daß die Anzahl und Lage der Code-Felder über den Umfang der Scheiben der Anzahl und Lage der Ziffernfelder für die Geheimzahlen entsprechen sollte. Letztere können im einfachsten Fall von Hand mit einem Schreibgerät in die Ziffernfelder geschrieben, aber auch z. B. aufgedruckt, -gestempelt, -geklebt oder -gerubbelt werden.

In bevorzugter Ausführung der Erfindung weist die Tragplatte zwei parallele Lagen auf, zwischen denen die Scheiben weitgehend eingeschlossen sind. Die beweglichen Teile der Vorrichtung sind dadurch gegen Verschmutzung und Beschädigung weitgehend geschützt. Die Scheiben brauchen mit ihrem äußersten Umfangsbereich nur soweit aus der durch die doppellagige Tragplatte gebildeten Hülle herauszuragen, daß sie sich von Hand drehen lassen. Zu diesem Zweck können in der bevorzugten Ausführung die Scheiben etwa bis zur Randkante der Tragplatte reichen und diese kann mit Randaussparungen versehen sein, in welchen die Scheiben zum Angreifen und Drehen zugänglich sind. Alternativ können aber auch die Scheiben seitlich über die Tragplatte vorstehen.

Die beiden Lagen der Tragplatte werden vorzugsweise durch Faltung einer einzigen Lage an einer Randkante gebildet. Nach der Faltung können die beiden Lagen unter Einschluß der Scheiben an den anderen Randkanten durch Schweißen, Kleben, Nieten, Verrastung oder in anderer geeigneter Weise miteinander verbunden werden. Es genügt aber auch, wenn eine Verbindung der beiden Lagen nur an einzelnen Punkten, z. B. in den der Faltkante gegenüberliegenden Eckbereichen, erfolgt. Außerdem können die beiden Lagen über kleine Zapfen, auf denen die Scheiben drehbar gelagert sind, miteinander verbunden sein.

Zweckmäßigerweise sollten die Tragplatte, eventuelle Verbindungsglieder zwischen ihren beiden Lagen, die Scheiben und deren Lagerzapfen aus demselben Grundmaterial bestehen. Die kann z. B. ein Kunststoff sein, wie er auch für Scheck- und Kreditkarten Verwendung findet. Vorgezogen wird die Herstellung der einzelnen Teile der Vorrichtung aus aus Zellulose oder Zelluloseregenerat bestehenden Materialien, weil sich diese normalerweise gut bedrucken und mit den üblichen Schreibgeräten beschriften lassen und außerdem problemlos entsorgt werden können.

Die im Zusammenhang mit Scheck- und Kreditkarten, tragbaren Telefonen, Kraftfahrzeug-Wegfahrsperren usw. gebräuchlichen Geheimzahlen sind meistens vierstellig. Dementsprechend ist in weiterer bevorzugter Ausgestaltung der Erfindung vorgesehen, daß die Tragplattenlage auf Seiten der Ziffernfelder der Scheiben mehrere Gruppen von wenigstens vier Fenstern aufweist, die in mit Ziffernfeldern versehenen Bereichen unterschiedlicher Scheiben derart angeordnet sind, daß die Fenster einer Gruppe eine Reihe bilden und/oder durch die Gestaltung der Fensterrahmen als zusammengehörig gekennzeichnet sind. Vorzugsweise befinden sich auf einer Seite der Tragplatte vier oder fünf Gruppen von Fenstern mit Durchblick auf Felder derselben Gruppe von Scheiben.

Wenn man nur wenige Geheimzahlen braucht, genügt eine einzige Reihe von vier Scheiben. Um mehr Geheimzahlen speichern zu können, können auch zwei Gruppen von je vier Scheiben vorgesehen sein. Zweckmäßigerweise bilden dann die Mittelpunkte der Scheiben beider Gruppen zueinander parallele Reihen. Vorzugsweise sollten nur die zu derselben Gruppe gehörenden Scheiben überlappen.

Die Zeichen, aus denen der Code zu bilden ist, können in einer ersten praktischen Ausführungsform der Erfindung am äußersten Rand der Scheiben angebracht sein, so daß sie in den Randaussparungen oder seitlich neben der Tragplatte sichtbar und einstellbar sind. Alternativ kann auch in der Tragplatte auf der den Feldern entgegengesetzten Seite im Bereich jeder Scheibe ein Fenster angeordnet sein, durch welches die kreisförmig auf der Scheibe angeordneten Zeichen, aus denen der Code zu bilden ist, einzeln sichtbar sind. Zweckmäßigerweise liegen die Fenster, durch welche die Codezeichen sichtbar sind, in einer Reihe. Daneben bietet diese nachstehend als Vorderseite bezeichnete Seite der Tragplatte genügend Platz für Aufdrucke aller Art, z. B. Werbeaufdrucke. Wenn darauf verzichtet wird, können auch noch zusätzlich zu den den Ziffernfeldern der Geheimzahlen zugeordneten Fenstern auf der Rückseite weitere Ziffernfelder und Fenster auf der Vorderseite der Vorrichtung angeordnet sein.

Nachstehend werden anhand der beiliegenden Zeichnungen Ausführungsbeispiele der Erfindung näher erläutert. Es zeigen:
- Fig. 1: die Vorderseite einer Vorrichtung zur kodierten Speicherung von Geheimzahlen gemäß der Erfindung mit vier drehbar gelagerten Scheiben;
- Fig. 2: die Rückseite der Vorrichtung nach Fig. 1;
- Fig. 3: die Vorderseite einer Scheibe der Vorrichtung nach Fig. 1 und 2;
- Fig. 4: die Rückseite der Scheibe nach Fig. 3;
- Fig. 5: eine Draufsicht auf die Vorrichtung nach Fig. 1 und 2 im geöffneten Zustand;
- Fig. 6 bis 10: Ansichten entsprechend Fig. 1 bis 5 einer Vorrichtung zur kodierten Speicherung von Geheimzahlen mit zwei Reihen von je vier Scheiben;
- Fig. 11: in einer Ansicht entsprechend Fig. 1 die Vorderseite einer abgewandelten Vorrichtung zur kodierten Speicherung von Geheimzahlen und
- Fig. 12: eine schematische Draufsicht auf eine geöffnete, abgewandelte Vorrichtung mit einer Einrichtung zum selbsttätigen Verdrehen der Scheiben.

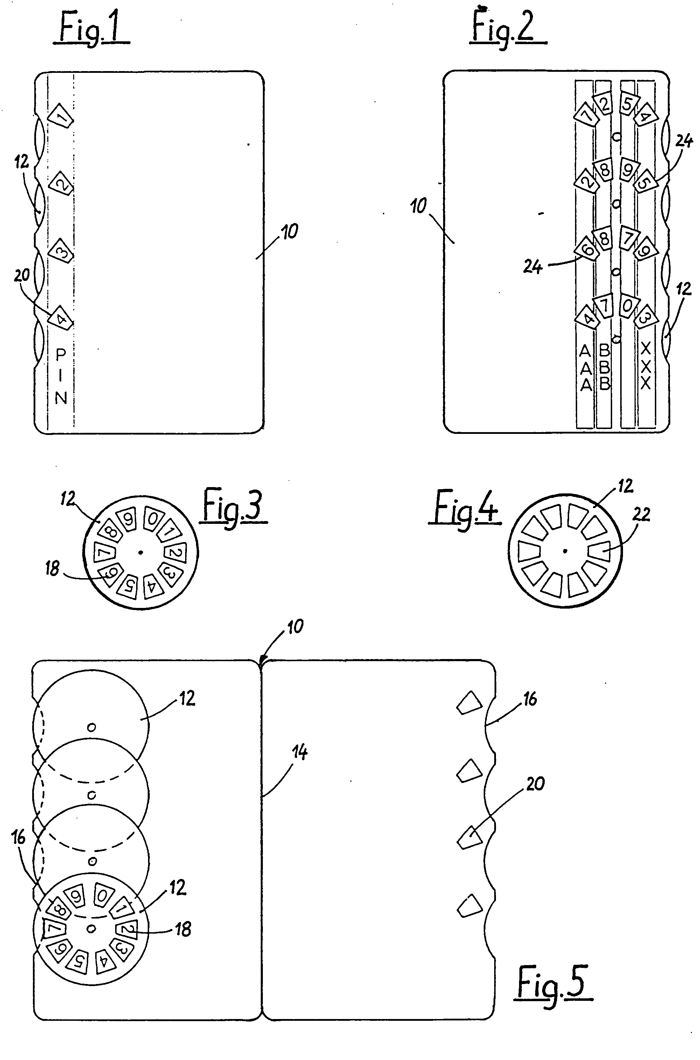

Die Vorrichtung nach Fig. 1 bis 5 besteht im wesentlichen nur aus fünf Teilen, nämlich einer Tragplatte 10 und vier gleichen Scheiben 12. Wie am besten aus Fig. 5 ersichtlich, sind die Scheiben 12 in einer parallel zu den Längskanten der rechteckigen Tragplatte 10 im Scheckkartenformat liegenden Reihe derart angeordnet und von solcher Größe, daß jeweils eine Scheibe 12 die in der Reihe nächste Scheibe teilweise überlappt. In Fig. 3 und Fig. 5 blickt man auf die Vorderseite der Scheiben 12. Sie ist gemäß Fig. 3 in ringförmiger Anordnung und gleicher Umfangsteilung mit den zehn Ziffern von 0 bis 9 bedruckt. Der Einfachheit halber zeigt in Fig. 5 nur die unterste Scheibe diesen Aufdruck, die übrigen drei Scheiben sind jedoch auf der Oberseite ebenso bedruckt, und jede der Scheiben 12 ist unabhängig von den anderen drehbar.

Das Ausgangsmaterial der Tragplatte 10 hat gemäß Fig. 5 zur Bildung von zwei äußeren Lagen im Format einer Scheckkarte, die zwischen sich die Scheiben 12 weitgehend einschließen, zunächst die doppelte Größe mit einer mittleren Faltkante 14, die nach dem Umfalten und Zusammenklappen der beiden Hälften eine äußere Längskante bildet. An der gegenüberliegenden Längskante sind beide Hälften bzw. Lagen der Tragplatte 10 mit vier Randaussparungen 16 versehen, in deren Bereich jeweils eine der Scheiben 12 über die Tragplatte 10 nach außen vorsteht, so daß man dort angreifen und die Scheiben 12 drehen kann. Vorzugsweise reichen die Scheiben 12 zwar in die Aussparungen 16 hinein, aber nicht über die äußere Längskante der Tragplatte 10 hinaus. Die Aussparungen 16 sind so flach und die auf die Vorderseite der Scheiben 12 aufgedruckten Ziffern 0 - 9 soweit vom äußeren Umfang radial nach innen versetzt, daß sie beim Drehen der Scheiben 12 nicht in den Bereich der Aussparungen gelangen. Statt der auf der Vorderseite der Scheiben 12 aufgedruckten Ziffern könnten an gleicher Stelle auch zehn unterschiedliche Farbfelder, Buchstaben oder Symbole aufgedruckt sein. Nachstehend werden deshalb diese von vornherein aufgedruckten Ziffern allgemein als Codezeichen 18 bezeichnet.

Wenn man in der Darstellung nach Fig. 5 die rechte Hälfte der Tragplatte 10 nach links überschlägt und unter Einschluß der Scheiben 12 auf der unteren Hälfte bzw. Lage der Tragplatte 10 durch Schweißen, Kleben, Nieten oder in anderer geeigneter Weise festlegt, ergibt sich die Vorderansicht nach Fig. 1. In der mit Bezug auf Fig. 5 rechten Hälfte der Tragplatte 10 sind nämlich neben der mit den Randaussparungen 16 versehenen äußeren Längskante mit demselben Zwischenabstand wie dem der Mittelpunkte der Scheiben 12 vier Fenster 20 derart angebracht, daß man durch jedes von ihnen auf die Vorderseite einer der Scheiben 12 im radialen Bereich der Codezeichen 18 schaut. Die Fenster 20 haben entsprechend den trapezförmigen Feldern der Codezeichen 18 ebenfalls eine trapezförmige Gestalt und sind entsprechend der mit Bezug auf die benachbarte Längskante schrägen Lage der jeweils darunterliegenden Codezeichen 18 ebenfalls schräg zur Längskante angeordnet. Es sei angenommen, daß die individuelle Codezahl, welches die einzige Zahl ist, die der Benutzer im Gedächtnis behalten muß, 4321 lautet. In der Vorderansicht nach Fig. 1 sind die Scheiben 12 so gedreht worden, daß gerade diese Codezahl, die auch als persönliche Identifikationsnummer (PIN) bezeichnet werden kann, in den Fenstern 20 erscheint.

Auf der in Fig. 4 gezeigten Rückseite der Scheiben 12 befinden sich im Auslieferungszustand der Vorrichtung nur leere Ziffernfelder 22 in ringförmiger Anordnung mit gleichmäßiger Umfangsteilung. Sie entspricht dem Umfangsabstand der Codezeichen 18. Gemäß Fig. 2 befinden sich in der die Rückseite bildenden unteren Hälfte der Tragplatte 10 vier Gruppen von jeweils vier in geraden, zu den Längskanten parallelen Reihen angeordneten Fenstern 24. Der Zwischenabstand der Fenster 24 jeder Gruppe entspricht dem Abstand der Mittelpunkte der Scheiben 12. Jeweils vier Fenster sind derart bogenförmig um den Mittelpunkt einer Scheibe 12 angeordnet, daß man auf vier der zehn Felder 22 schaut. Auch die Fenster 24 richten sich mit ihrer Trapezform und schrägen Lage mit Bezug auf die Längskanten nach der Lage der darunterliegenden Felder 22.

Um die Zusammengehörigkeit der zu einer Gruppe gehörenden Fenster 24 hervorzuheben, können sie z. B. durch farbige Umrahmungen gekennzeichnet und durch Verwendung unterschiedlicher Farben von den Fenstern der anderen Gruppen abgehoben sein. Gemäß Fig. 2 können auch die in gerader Reihe angeordneten Fenster einer Gruppe in einem farblich oder graphisch abgesetzten schmalen Streifen liegen, wobei im Ausführungsbeispiel nach Fig. 2 von den vier Streifen einer, d.h. eine Gruppe von Fenstern, mit "A A A" ein anderer mit "B B B" und ein dritter mit "X X X" gekennzeichnet ist. Eine Gruppe von Fenstern ist noch nicht gekennzeichnet. Die genannten Kennzeichnungen werden vom Benutzer zur Bezeichnung der verschiedenen Banken usw. eingetragen, für welche die Geheimzahlen gebraucht werden.

Bei der Einrichtung bzw. Kodierung der Vorrichtung wird so vorgegangen, daß zunächst die persönliche Codezahl, im Beispielsfall 4321, in den Fenstern 20 auf der Vorderseite eingestellt wird. Die Ziffernfelder 22 auf der Rückseite der Scheiben 12 sind in diesem Ausgangszustand noch leer. Es können also mittels eines Schreibgeräts die Ziffern der den einzelnen Banken usw. zugeordneten Geheimzahlen auf die jeweils unter den Fenstern 24 liegenden freien Felder 22 geschrieben werden, z. B. die Ziffern der Geheimzahl 4627 in die Felder 22, die sich unter den Fenstern 24 der mit "A A A" bezeichneten, einer bestimmten Bank zugeordneten Reihe befinden. Die anderen zu speichernden Geheimzahlen lauten im Ausführungsbeispiel 7882, 0795 und 3954. Nachdem die Ziffern dieser Geheimzahlen eingetragen worden sind, werden die Scheiben 12 gedreht und weitere Ziffern mit zufälliger Verteilung durch die Fenster 24 hindurch auf die übrigen leeren Felder 22 geschrieben. Auf diese Weise läßt sich in wenigen Minuten die Vorrichtung gebrauchsfertig machen. Der Arbeitsaufwand ist so gering, daß man dann, wenn sich eine der Geheimzahlen ändert, ohne weiteres die bis dahin benutzte Vorrichtung wegwerfen und eine andere neu beschriften kann.

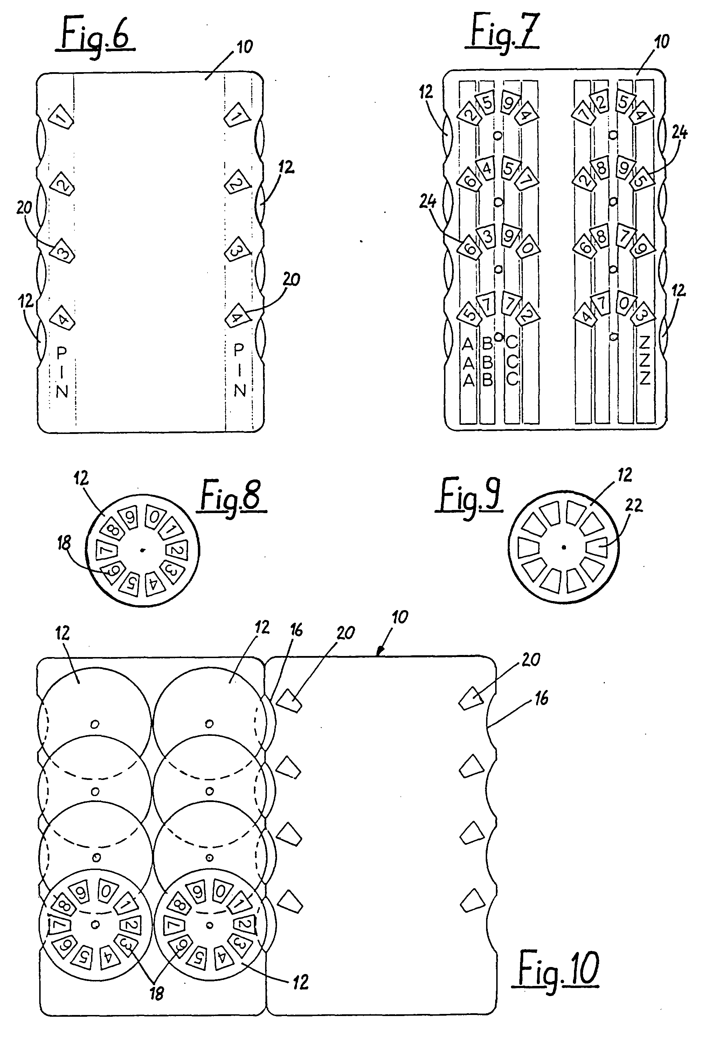

Das Ausführungsbeispiel nach Fig. 6 bis 10 unterscheidet sich von dem nach Fig. 1 bis 5 nur dadurch, daß nicht nur eine Reihe von Scheiben 12, sondern nebeneinander zwei parallele Reihen vorhanden sind, wobei die Scheiben der beiden Reihen an den gegenüberliegenden Längskanten aus der umhüllenden Tragplatte herausragen. Entsprechend der doppelten Anzahl Scheiben verdoppelt sich bei der Ausführung nach Fig. 6 bis 10 auch die Zahl der Randaussparungen 16, vorderen Fenster 20 und rückseitigen Fenster 24. Statt vier können somit acht Geheimzahlen gespeichert werden. Zum Kodieren beider Gruppen von je vier Geheimzahlen kann wahlweise dieselbe Codezahl benutzt werden, es können aber auch in beiden Reihen der in Fig. 6 gezeigten Fenster 20 unterschiedliche Codezahlen eingestellt werden.

Die Funktion der Fenster 20 könnte auch von den Randaussparungen 16 mit übernommen werden. In diesem Fall wären die Codezeichen 18 am äußersten Umfang der Scheiben 12 angebracht, z. B. unterschiedliche Farbfelder. Dann könnte in den Ansichten nach Fig. 1 und 6 die gesamte Vorderfläche für den Aufdruck von Werbebotschaften und/oder wichtiger Daten freibleiben. Alternativ bestünde in diesem Fall die Möglichkeit, die Vorderseite nach Fig. 1 und 6 in gleicher Weise wie die Rückseite nach Fig. 2 und 7 mit Fenstern 24 zum Eintragen von Geheimzahlen in ursprünglich leere Felder 22 auf der Vorderseite der Scheiben 12 zu versehen. Dadurch würde sich die Kapazität der zu speichernden Geheimzahlen bei der Ausführung nach Fig. 1 bis 5 mit vier Scheiben auf acht und die Kapazität der Vorrichtung nach Fig. 6 bis 10 mit acht Scheiben auf sechzehn Geheimzahlen vergrößern. Bei extremer Platzausnutzung ließen sich sogar jeweils fünf Fenster 24 bogenförmig nebeneinander anordnen. Auf diese Weise könnte man bei den beiden bildlich dargestellten Ausführungen fünf bzw. zehn Geheimzahlen kodiert speichern, bei Verwendung der Randaussparungen 16 als Fenster für die Codezeichen 18 ließen sich auf diese Weise mit acht Scheiben 12 sogar zwanzig Geheimzahlen speichern.

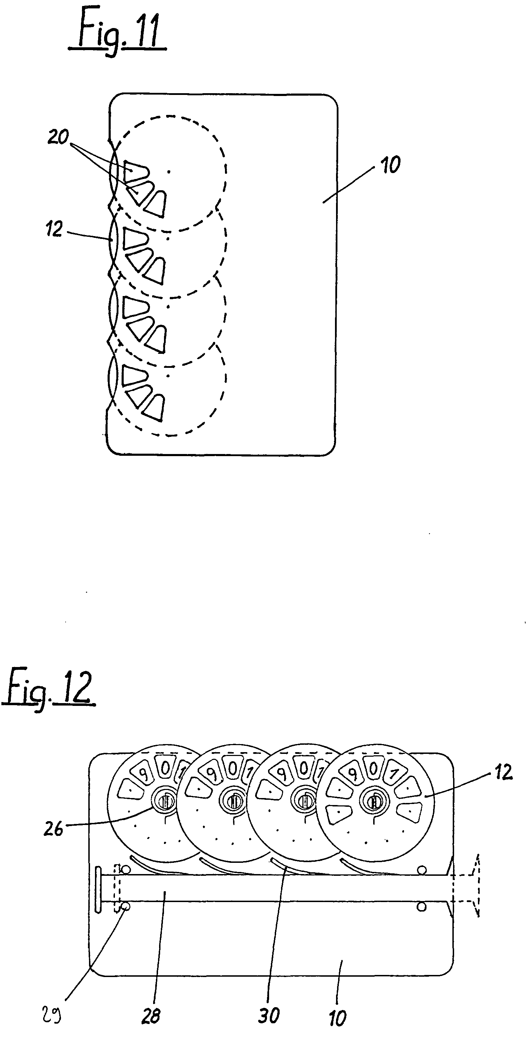

Fig. 11 zeigt eine Fig. 1 entsprechende Darstellung eines weiteren Ausführungsbeispiels, bei dem anstelle jeweils nur eines Fensters 20 für die Codezeichen 18 jeder Scheibe 12 deren drei vorhanden sind, so daß drei Codezeichen 18 jeder Scheibe gleichzeitig sichtbar sind. Der Benutzer hat in diesem Fall die Möglichkeit, sich außer einer bestimmten Codezahl auch noch eine bestimmte Reihenfolge der Fenster 20 zu merken, z. B. die Beschriftungs- und Ablesestellung der Scheiben so zu wählen, daß eine bestimmte Codezahl in der obersten Reihe, wahlweise aber auch in der mittleren oder unteren Reihe der Fenster 20 erscheint. Der Benutzer kann alternativ Einstellungen der Scheiben wählen, bei denen seine Codezahl in ungewöhnlicher Form in den zur Verfügung stehenden zwölf Fenstern 20 erscheint, z. B. die erste Ziffer im oberen Fenster der rechten Scheibe, die zweite Ziffer im mittleren Fenster der linken Scheibe und die beiden letzten Ziffern in den unteren Fenstern der beiden mittleren Scheiben. Die Mehrzahl von Fenstern 20 im Bereich jeder Scheibe 12 bietet daher den Vorteil größerer Sicherheit, weil ein unbefugter Benutzer, selbst wenn er weiß oder vermutet, daß der Karteninhaber als Codezahl sein Geburtsdatum benutzt, nicht wissen kann, in welchen der zwölf Fenster 20 die Ziffern des Geburtsdatums bei korrekter Einstellung der Scheiben 12 erscheinen. Insgesamt gestatten drei Fenster 20 an jeder der Scheiben mit jeweils 10 Feldern 3⁴ x 10⁴ = 81.000 verschiedene Einstellungen der Scheiben.

Andererseits kann das Vorhandensein einer Mehrzahl von Fenstern 20 im Bereich jeder Scheibe 12 vom Karteninhaber dazu benutzt werden, entweder durch Einstellung derselben Codezahl in verschiedenen Fenstern 20 oder durch Einstellung unterschiedlicher Codezahlen mehrere Stellungen der Scheiben 12 zu definieren, in denen an den Fenstern 24 jeweils z. B. vier oder fünf Geheimzahlen abgelesen werden können, so daß man sich z. B. mit vier Scheiben 12 und vier Fenstern 24 nicht nur vier, sondern acht, zwölf oder noch mehr Geheimzahlen merken kann.

Es versteht sich, daß die beiden Hälften der Tragplatte 10 statt an einer Längskante 14 auch an einer der beiden kürzeren Seitenkanten der Vorrichtung aneinandergrenzen können. Bei Herstellung aus Kunststoff kann die Faltkante 14 ein Filmscharnier sein. Die Lagerzapfen für die Scheiben 12 könnten bei einer solchen Ausführung an die untere Hälfte der Tragplatte 10 angeformt sein. Die obere Hälfte der Tragplatte 10, in der sich im Ausführungsbeispiel nur die Fenster 20 befinden, könnte dann eine gleichmäßige, von der Lagerung der Scheiben 12 unbeeinflußte Oberfläche darbieten. Gleiches gilt, wenn die Scheiben 12 durch Nieten nur an der unteren Hälfte der Tragplatte 10 drehbar befestigt werden. Im Hinblick auf die Entsorgung sollten dann, wenn die Tragplatte 10 und die Scheiben 12 aus Karton oder einem anderen Material auf der Basis von Zellulose gefertigt sind, auch die Lagerzapfen der Scheiben 12 aus einem Material auf der Grundlage von Zellulose bestehen.

Bei einer weiteren in der Praxis bevorzugten Ausführungsform besteht die Tragplatte aus zwei am Rand miteinander zu verschweißenden Teilen, z. B. aus mittels Ultraschall verschweißbarem Kunststoff. Das eine Teil ist dabei vorzugsweise ein Spritzgußteil, an dem Achszapfen zur Lagerung der Scheiben 12 angeformt und die Fenster 24 eingeformt sind. Das andere Teil der Tragplatte 10 kann eine vorzugsweise transpartente vor der Montage innenseitig bedruckbare Folie sein, die auf eine innenseitig stufenweise eingesenkte Auflagefläche eines entsprechend den Achszapfen erhöhten und außenseitig gerundeten Randstegs des im übrigen plattenförmigen Spritzgußteils aufgelegt und mit diesem verschweißt wird. Auch an der Randkante, über die die Scheiben 12 teilweise vorstehen, kann zwischen den Scheiben 12 an aufragenden Randabschnitten des Spritzgußteils eine Verschweißung mit der Folie stattfinden. Bei dieser Ausführungsform brauchen die Fenster 20 nicht aus der Folie ausgestanzt zu werden, sonder lassen sich dadurch gewinnen, daß beim Bedrukken der transparenten Folie die Flächen der Fenster 20 nicht mitbedruckt werden, also frei und durchsichtig bleiben.

Schließlich ist in Fig. 12 in vereinfachter Draufsicht eine Vorrichtung im geöffneten Zustand gezeigt, bei der zwischen jeder Scheibe 12 und der Tragplatte 10 eine Spiralfeder 26 eingespannt ist, die beim Drehen der Scheiben in die Ablesestellung je nach dem Drehwinkel jeder Scheibe mehr oder weniger gespannt wird. In der gezeigten Ausgangsstellung stellen sich die Scheiben 12 je nach Anbringung der Spiralfedern 26 entweder, wie im Ausführungsbeispiel gezeigt, auf eine definierte, übereinstimmende Drehwinkelstellung ein, bei der in einer Reihe von Fenstern 20 jeweils dieselbe Ziffer erscheint, oder man läßt bei allen Scheiben individuelle Ausgangsstellungen zu. In beiden Fällen bewirkt ein Verdrehen der Scheiben aus der Ruhelage das Spannen der Federn, so daß sich die Scheiben 12 nach dem Loslassen wieder in die Ruhelage zurückdrehen, weil sie mit nur geringer Reibung drehbar gelagert sind.

Sollen die Scheiben 12 in der jeweils durch Drehen aus der Ruhelage eingestellten Drehwinkelstellung, z. B. der Ablesestellung, verharren, muß man vor der Einstellung eine an der Tragplatte 10 verschieblich geführte, sich parallel zu den Zentren der Scheiben 12 erstreckende Arretier- und Rückstellschiene 28 bis gegen einen Anschlag 29 seitlich herausziehen. An der Schiene 28 sind elastische Hebel 30 angebracht, die sich bremsend gegen die Scheiben 12 anlegen und sie dadurch am Verdrehen unter der Rückstellwirkung der Spiralfedern 26 hindern. Die Bremskraft kann aber durch Drehen der Scheiben mit der Hand leicht überwunden werden, so daß die Einstellung der Scheiben in die Ablesestellung nach dem Herausziehen der Arretier- und Rückstellschiene 28 genauso einfach auszuführen ist wie bei den vorstehend beschriebenen Ausführungsbeispielen.

Nach dem Gebrauch der Vorrichtung, d. h. nach dem Ablesevorgang, ist die seitlich herausragende Arretier- und Rückstellschiene 28 sehr auffällig. Normalerweise wird sie verhindern, daß sich die Vorrichtung wieder in ein Etui für Scheckkarten einstecken läßt. Der Benutzer wird also ganz selbstverständlich die Arretier- und Rückstellschiene 28 wieder in die in Fig. 12 in ausgezogenen Linien gezeigte Ausgangsstellung zurückschieben, in der die Schiene nicht mehr über den äußeren Umfang der Tragplatte vorsteht. Dadurch werden die Bremshebel 30 von den Scheiben 12 gelöst und diese durch die Spiralfedern 26 in ihre Ruhelage zurückgedreht. Damit wird vorgebeugt, daß der Benutzer nach Gebrauch der Vorrichtung vergißt, die Scheiben aus der Ablesestellung zu verdrehen.

## Patentansprüche

1. Vorrichtung zur kodierten Speicherung einer Vielzahl von Geheimzahlen, bestehend aus wenigstens vier unabhängig voneinander drehbar gelagerten Scheiben (12), die in über den Umfang verteilten Feldern (22) vom Benutzer entsprechend den Geheimzahlen individuell mit Ziffern zu versehen und entsprechend einem individuellen Code in eine bestimmte Relativstellung einstellbar sind, in der die Geheimzahlen ablesbar sind, **dadurch gekennzeichnet, daß** die Scheiben (12) an einer Tragplatte (10) etwa von der Größe einer Scheckkarte derart nebeneinander gelagert sind, daß sie sich am Umfang teilweise überlappen, und daß die Zeichen (18), aus denen der Code zu bilden ist, auf der Seite der Felder (22) neben deren radialen Bereich oder auf der anderen Seite der Scheiben (12) angebracht sind.

2. Vorrichtung nach Anspruch 1, **dadurch gekennzeichnet, daß** die Tragplatte (10) zwei parallele Lagen aufweist, zwischen denen die Scheiben (12) weitgehend eingeschlossen sind.

3. Vorrichtung nach Anspruch 1 oder 2, **dadurch gekennzeichnet, daß** die Tragplattenlage auf Seiten der Felder (22) mehrere Gruppen von wenigstens vier Fenstern (24) aufweist, die in den mit Feldern (22) versehenen Bereichen unterschiedlicher Scheiben derart angeordnet sind, daß die Fenster (24) einer Gruppe eine Reihe bilden und/oder durch die Gestaltung der Fensterrahmen als zusammengehörig gekennzeichnet sind.

4. Vorrichtung nach einem der Ansprüche 1 bis 3, **dadurch gekennzeichnet, daß** zwei Gruppen von je vier Scheiben (12) vorgesehen sind.

5. Vorrichtung nach einem der Ansprüche 2 bis 4, **dadurch gekennzeichnet, daß** die Scheiben (12) etwa bis zur Randkante der Tragplatte (10) reichen und diese mit Randaussparungen (16) versehen ist, in welchen die Scheiben (12) zum Angreifen und Drehen zugänglich sind.

6. Vorrichtung nach Anspruch 5, **dadurch gekennzeichnet, daß** die Zeichen (18), aus denen der Code zu bilden ist, am äußersten Rand der Scheiben (12) angebracht sind, so daß sie in den Randaussparungen oder seitlich neben der Tragplatte (10) einstellbar sind.

7. Vorrichtung nach einem der vorhergehenden Ansprüche, **dadurch gekennzeichnet, daß** in der Tragplatte (10) auf der Seite der Codezeichen (18) im Bereich jeder Scheibe wenigstens ein Fenster (20) angeordnet ist, durch welches die kreisförmig auf der Scheibe (12) angeordneten Zeichen (18), aus denen der Code zu bilden ist, einzeln sichtbar sind.

8. Vorrichtung nach einem der vorhergehenden Ansprüche, **dadurch gekennzeichnet, daß** die Grundplatte (10) einerseits aus einem Spritzgußteil mit angeformten Lagerzapfen für die Scheiben (12) und eingeformten Fenstern (24) auf seiten der zu beschriftenden Felder (22) der Scheiben (12) sowie andererseits einer mit dem Spritzgußteil an Rand verschweißten Folie besteht.

9. Vorrichtung nach Anspruch 8, **dadurch gekennzeichnet, daß** die Folie transparent und derart bedruckt ist, daß die Fenster (20) im Bereich der Codezeichen (18) durch unbedruckte Stellen gebildet sind.

10. Vorrichtung nach einem der vorhergehenden Ansprüche, **dadurch gekennzeichnet, daß** eine Einrichtung (26, 30) zum Verdrehen der Scheiben (12) aus einer reib- oder formschlüssig arretierten Stellung vorhanden ist, die durch einen Auslöser (28) betätigbar ist.

## Claims

1. A device for the coded storage of a multitude of secret numbers, consisting of at least four disks (12), which are rotatably seated independently of each other, in fields (22), which are distributed over the circumference, can be individually provided by the user with digits corresponding to secret numbers and can be brought into a defined relative position in accordance with an individual code, in which the secret numbers can be read, **characterised in that** the disks (12) are placed next to each other on a support plate (10) of the approximate size of a check card in such a way that they partially overlap at the circumference, and that the symbols (18) from which the code is to be formed are applied on the side of the fields (22) next to their radial area, or on the other side of the disks (12).

2. The device in accordance with claim 1, **characterised in that** the support plate (10) has two parallel layers, between which the disks (12) are enclosed to a large extent.

3. The device in accordance with claim 1 or 2, **characterised in that** the support plate layer on the side of the fields (22) has several groups of at least four windows (24), which are arranged in the areas provided with fields (22) of different disks, and are arranged in such a way, that the windows (24) of one group form a row and/or are identified as belonging together by the design of the window frames.

4. The device in accordance with one of claims 1 to 3, **characterised in that** two groups of four disks (12) each are provided.

5. The device in accordance with one of claims 2 to 4, **characterised in that** the disks (12) extend approximately as far as the edge of the support plate (10), and the latter is provided with cut-outs (16) at the edge, in which the disks (12) are accessible for grasping and rotating.

6. The device in accordance with claim 5, **characterised in that** the symbols (18) from which the code is to be formed are applied on the outermost edge of the disks (12), so that they can be set in the cut-outs at the edge, or laterally next to the support plate (10).

7. The device in accordance with one of the preceding claims, **characterised in that** in the area of each disk at least one window (20) is arranged in the support plate (10) on the side of the coded symbols (18), through which the symbols (18), which are arranged in a circle on the disk (12), are individually visible.

8. The device in accordance with one of the preceding claims, **characterised in that** one side of the base plate (10) consists of an injection-molded element with bearing journals for the disks (12) and windows (24) formed thereon on the side of the fields (22) of the disks (12) to be inscribed, and on the other side of a foil, which is welded at the edge to the injection-molded element.

9. The device in accordance with claim 8, **characterised in that** the foil is transparent and imprinted in such a way that the windows (20) in the area of the coded symbols (18) are constituted by places without print.

10. The device in accordance with one of the preceding claims, **characterised in that** a device (26, 30) is provided for rotating the disks (12) out of a position, in which they are frictionally or interlockingly arrested, and which can be actuated by a trigger (28).

## Revendications

1. Dispositif de notation cryptée d'un nombre important de nombres secrets, composé d'au moins quatre disques (12) montés rotatifs, indépendamment les uns des autres, ces disques comportant des champs (22) répartis à la périphérie dans lesquels l'utilisateur inscrit individuellement des chiffres correspondant aux nombres secrets, des disques pouvant être réglés selon un code individuel dans une certaine position relative, dans laquelle on peut lire les nombres secrets,
**caractérisé en ce que**
les disques (12) sont montés les uns à côté des autres sur une plaque de support (10) ayant sensiblement la taille d'une carte de crédit,
ces disques se chevauchent en partie par leur périphérie et
les signes (18) à partir desquels on forme le code, sont prévus sur le côté des champs (22), à côté de leur zone radiale ou sur l'autre côté des disques (12).

2. Dispositif selon la revendication 1,
**caractérisé en ce que**
la plaque de support (10) comporte deux couches parallèles entre lesquelles les disques (12) sont enfermés en grande partie.

3. Dispositif selon l'une quelconque des revendications 1 ou 2,
**caractérisé en ce que**
la couche de la plaque de support sur le côté des champs (22) comporte plusieurs groupes d'au moins quatre fenêtres (24) dans lesquelles se trouvent les champs (22) munis de chiffres des différents disques,
les fenêtres (24) d'un groupe forment une rangée et/ou sont **caractérisées par** la forme des cadres de fenêtre comme ceux correspondants.

4. Dispositif selon l'une quelconque des revendications 1 à 3,
**caractérisé par**
deux groupes de chaque fois quatre disques (12).

5. Dispositif selon l'une quelconque des revendications 2 à 4,
**caractérisé en ce que**
les disques (22) arrivent sensiblement jusqu'au bord du plateau de support (10) et celui-ci est muni de découpes (16) réalisées dans le bord dans lesquelles les disques (12) sont accessibles et peuvent être tournés.

6. Dispositif selon la revendication 5,
**caractérisé en ce que**
les signes (18) à partir desquels on forme le code sont prévus au bord extérieur des disques (12) de façon à pouvoir être réglés dans les découpes du bord ou latéralement à côté de la plaque de support (10).

7. Dispositif selon l'une quelconque des revendications précédentes,
**caractérisé en ce que**
dans la plaque de support (10), sur le côté des signes de code (18), au niveau de chaque disque, il est prévu au moins une fenêtre (20) à travers lesquelles apparaissent séparément les signes (18) répartis suivant un cercle sur les disques (12) et qui forment le code.

8. Dispositif selon l'une quelconque des revendications précédentes.
**caractérisé en ce que**
la plaque de base (10) est d'une part constituée d'une pièce injectée avec des tourillons de palier, formés pour les disques (12) et des fenêtres (24) moulées, sur le côté des champs à munir d'inscription des disques (12) et d'autre part d'une feuille soudée au bord à la pièce injectée.

9. Dispositif selon la revendication 8,
**caractérisé en ce que**
la feuille est transparente et est imprimée pour que les fenêtres (20) soient formées au niveau des signes de code (18) par des zones non imprimées.

10. Dispositif selon l'une quelconque des revendications précédentes.
**caractérisé par**
une installation (26, 30) pour faire tourner les disques (12) à partir d'une position arrêtée par frottement ou par une liaison par la forme, et qui peut être actionnée par un déclencheur (28).
